# EUROPEAN PATENT SPECIFICATION

(11) **EP 3 001 778 B1**
(45) Date of publication and mention of the grant of the patent: **19.12.2018**
(21) Application number: 14186826.5
(22) Date of filing: 29.09.2014
(51) Int. Cl.: H05B 37/02, H05B 33/08

(54) **An accessory device connectable to an operating device**
Zubehörvorrichtung, die anschließbar an eine Bedienungsvorrichtung ist
Dispositif accessoire connectable à un dispositif de commande

(43) Date of publication of application: 30.03.2016
(73) Proprietor: Helvar Oy Ab, 02150 Espoo (FI)
(72) Inventor: Vihinen, Hannu, 03600 KARKKILA (FI)
(74) Representative: Berggren Oy, Helsinki & Oulu

(56) References cited:
- EP-A1- 2 481 267
- WO-A1-2012/109686
- WO-A1-2014/000765
- GB-A- 2 427 767

## Description

### FIELD OF THE INVENTION

The example embodiments of the present invention relate to an accessory device that is connectable to an operating device of a lighting means, such as a light emitting diode (LED) driver. In particular, one or more example embodiments of the present invention relate to an accessory device that is connectable to an operating device via a two-wire control interface, via which the operating device provides a predefined voltage. Moreover, one or more example embodiments of the present invention relate to an arrangement including at least the operating device and the accessory device coupled thereto via the control interface.

### BACKGROUND OF THE INVENTION

Manufacturers of luminaire drivers for lighting means must meet contradictory expectations. On one hand, lighting designers and luminaire manufacturers would appreciate having a wide selection of different components and devices at their disposal, so that they could pick the best suited solution for each individual need. On the other hand, there is the constant pressure for keeping costs low in designing and manufacturing; the more versatile the product palette, the more complicated (and more expensive) it becomes to maintain. If a single driver is made adaptable for e.g. a wide range of output powers, in practice one ends up overdimensioning a large proportion of its internal components so that when some of these products are sold for a low-power application, they actually contain components that are far too heavy and far too effective (and, consequently, exaggeratedly expensive) for that purpose. But then again if one tailors a specific product for each possible output voltage and power, logistic problems become overwhelming because one should ensure that whichever product the client would like to use, thousands of these can be readily delivered to anywhere in the world.

Additionally, if the driver and its accessories (like sensors, wireless transceiver modules or the like) exhibit a large number of connectors for external connections, and/or otherwise appear complicated to configure and use, it tends to decrease the willingness of client companies to adopt it in their designs, while at the same time increasing number of connectors for external connections typically also increase manufacturing costs.

As a conclusion, an operating device of a lighting means, such as a driver for light emitting diodes (LEDs) in a LED-based luminaire (a.k.a. a LED driver) should have simple appearance, yet versatile characteristics that can be easily repeated in differently dimensioned versions, so that the advantages of mass production can be fully utilized.

In this regard, a widely accepted configuration option is to equip the LED driver with a control interface for connecting an external identification component. Such control interface can also be called as an *I*ₛₑₜ connector. The control interface, e.g. the *I*ₛₑₜ connector, has two connection pins between which a constant or substantially constant voltage is supplied by the LED driver. By externally connecting a relatively inexpensive and simple component, typically a resistor *R*ₛₑₜ, between the two pins of the control interface the luminaire manufacturer is able to set the nominal (e.g. maximum) output current value of the LED driver according to his needs.

Inside a LED driver there are two basic approaches to designing the control interface. We may call them the analog approach and the digital approach. According to the analog approach whatever is connected to the control interface from outside becomes part of a voltage divider or other kind of a feedback arrangement that is responsible for monitoring an actual output current level from the LED driver at all times. Thus the value of an external component e.g. the resistor *R*ₛₑₜ, has a role in defining at what level the internal output current limiter arrangement in the LED driver begins to get involved. According to the digital approach the LED driver is capable of internally detecting or measuring the resistance or other electric characteristic of the component connected to the control interface, e.g. the resistor *R*ₛₑₜ, which detecting or measuring typically involves making use of a programmable device (e.g. a microprocessor or a microcontroller) - hence the designation "digital" approach.

The control interface provided e.g. by the *I*ₛₑₜ connection may allow also connecting a component different from the resistor *R*ₛₑₜ to make use of the control interface in a different manner. As an example, a temperature-sensing element such as an NTC (negative temperature coefficient) or PTC (positive temperature coefficient) resistor may be connected to the LED driver via the control interface. In such an arrangement the idea is that a rising temperature may be a symptom of excessively high current delivered to the load from the LED driver, thereby making use of the temperature-dependent resistance of the NTC/PTC resistor to create a safety mechanism: a hotter NTC/PTC resistor will limit the output current more than a cold one.

A document GB 2 427 767 A is known to disclose a circuitry arrangement for operating a light source comprising a device for estimating the switch-off time duration of the current supply for the circuitry arrangement.

A document WO 2012/109686 A1 is known to disclose an emergency light unit designed according to the DALI standard and connected to a bus of a lighting system, to a rechargeable store of electrical energy, and to emergency lighting means.

### SUMMARY OF THE INVENTION

It is an object of the present invention to provide an accessory device that is connectable to the control interface, e.g. the *I*ₛₑₜ connection, of an operating device of a lighting means (such as a LED driver) while still enabling the use of the control interface to its original purpose of connecting an external identification component that defines the nominal output current value of the operating device.

The object(s) of the invention are reached by an accessory device for an operating device of lighting means and by an arrangement as defined by the respective independent claims.

According to a first example embodiment of the invention, an accessory device for an operating device of lighting means is provided, the accessory device comprising an interface comprising a first node and a second node for electrically coupling the accessory device to respective nodes of the operating device for reception of a voltage across said first and second nodes, energy storage means adapted to store and provide electrical energy within the accessory device, an accessory module coupled to receive the electrical energy from said energy storage means, switching means comprising first switching means adapted to selectively enable or disable a first electrical connection between the energy storage means and said interface, and control means adapted to operate the first switching means in accordance with a predefined switching pattern to selectively cause the energy storage means to receive electrical energy from said interface or keep the energy storage means from receiving electrical energy from said interface.

According to a second example embodiment of the invention, an arrangement is provided, the arrangement comprising an accessory device according to the first example embodiment and an operating device of lighting means comprising a second interface comprising a fourth node and a fifth node, the operating device arranged to provide said voltage across said fourth and fifth nodes, wherein each of the first and second nodes of the accessory device is electrically coupled to respective one of the fourth and fifth nodes of the operating device, and wherein the operating device comprises second current sensing means for sensing the electric current provided via said second interface, and current evaluation means for determining a reference value of said electric current provided via said second interface and for generating, on the basis of such determined reference value, control information indicative of electric characteristics of lighting means coupled as a load of the operating device. The exemplifying embodiments of the invention presented in this patent application are not to be interpreted to pose limitations to the applicability of the appended claims. The verb "to comprise" and its derivatives are used in this patent application as an open limitation that does not exclude the existence of also unrecited features.

Some features of the invention are set forth in the appended claims. Aspects of the invention, however, both as to its construction and its method of operation, together with additional objects and advantages thereof, will be best understood from the following description of some example embodiments when read in connection with the accompanying drawings.

### BRIEF DESCRIPTION OF THE DRAWINGS

Figure 1 schematically illustrates some components of an arrangement in accordance with an example embodiment.
Figure 2 schematically illustrates some components of an arrangement in accordance with an example embodiment.
Figure 3 schematically illustrates some components of an arrangement in accordance with an example embodiment.
Figure 4 schematically illustrates some components of an accessory device in accordance with an example embodiment.
Figure 5 schematically illustrates some components of an accessory device in accordance with an example embodiment.
Figure 6 illustrates an example of a switching pattern that may be applied in an accessory device in accordance with an example embodiment.
Figure 7 illustrates a concept of providing a signaling pattern from an accessory device in accordance with an example embodiment.
Figure 8 schematically illustrates some components of an accessory device in accordance with an example embodiment.
Figure 9 illustrates a concept of providing a signaling pattern from an accessory device in accordance with an example embodiment.
Figure 10a schematically illustrates some components of an accessory device in accordance with an example embodiment.
Figure 10b schematically illustrates some components of an accessory device in accordance with an example embodiment.
Figure 11 schematically illustrates some components of an arrangement in accordance with an example embodiment.
Figure 12 schematically illustrates some components of an accessory device in accordance with an example embodiment.

### DETAILED DESCRIPTION

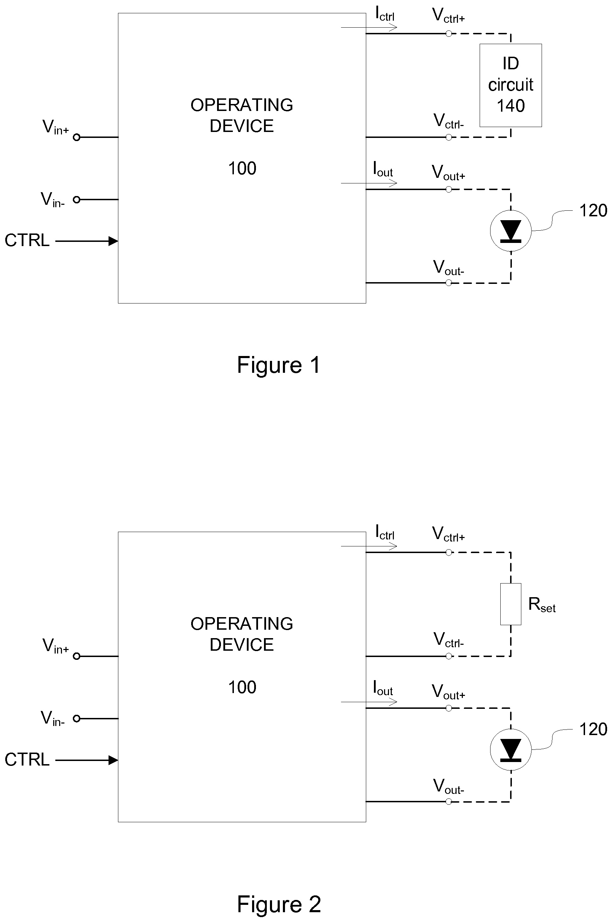

Figure 1 schematically illustrates an arrangement comprising an operating device 100 for operating a lighting means 120 and an identification circuit 140 for configuring the operation of the operating device 100.

The electric characteristics of the identification circuit 140 are indicative of a current rating of said lighting means 120. The identification circuit 140 may comprise a single identification component or the identification circuit 140 may comprise an electric circuit comprising an arrangement of two or more identification components. The lighting means 120 and the identification circuit 140 are connectable to respective connections or interfaces provided in the operating device 100, as will be described in detail in the following. The operating device 100, the lighting means 120 and the identification circuit 140 may be provided e.g. as components of a luminaire or as components of a lighting arrangement.

The operating device 100 may comprise, for example, a LED driver device and the lighting means 120 may comprise a LED module. The LED module may comprise one or more LEDs, where the LEDs may be arranged e.g. as a string of one or more LEDs connected in series or as two or more strings of LEDs connected in parallel, where each string of LEDs comprises one or more LEDs connected in series. As another example, the operating device 100 may comprise a driver for a laser diode (LD) or an organic light-emitting diode (OLED), and the lighting means 120 may comprise a LD module including one or more LDs, or an OLED module including one or more OLEDs, arranged in the module in a similar manner as described for the LED(s) of a LED module above. In general, the lighting means 120 comprises one or more light-emitting semiconductor devices whereas the operating device 100 comprises a driver suitable for operating these light-emitting semiconductor devices.

The operating device 100 is arranged to generate a regulated output current *I*ₒᵤₜ to an output connection of the device 100 using electric energy brought to an input of the operating device 100 via input nodes *Vᵢₙ₊* and *Vᵢₙ₋* under control of one or more control signals or commands provided to the operating device 100 via a control signal input CTRL. The output connection may also be referred to as an output interface. In its simplest form the output interface of the operating device 100 is provided as a two-wire or two-pin connection formed by output nodes *Vₒᵤₜ₊* and *Vₒᵤₜ₋*. Typically, the node *Vₒᵤₜ₋* is at a ground potential while a higher potential is provided at the node *Vₒᵤₜ₊.* Some lighting means may be driven with alternating current (AC), in which case the potentials of the two output nodes change polarity repeatedly.

The operating device 100 is arranged to continuously control or regulate the output current *I*ₒᵤₜ such that it exhibits desired electrical characteristics. As an example, the operating device may be arranged to provide the output current *I*ₒᵤₜ as a direct current (DC) of desired characteristics exhibiting nominal level that is kept constant or substantially constant. The operating device 100 may be arranged to continuously keep the level of the output current *I*ₒᵤₜ at the nominal level or the operating device 100 may be arranged to (e.g.) periodically vary the level of the output current *I*ₒᵤₜ between the nominal level and a minimum level (typically zero) according to a desired pattern such that a desired average current is provided. Consequently, at any given time the output voltage *V*ₒᵤₜ across the nodes *Vₒᵤₜ₊* and *Vₒᵤₜ₋* of the output depends on the level of the output current *I*ₒᵤₜ and on characteristics of the load, e.g. the electrical characteristics of the lighting means 120 connected to the output interface of the operating device 100.

The operating device 100 further comprises a control interface for connecting the identification circuit 140 to the device 100. In a simple embodiment the control interface is provided as a two-wire or a two-pin connection comprising nodes *V_{ctrl+}* and *V_{ctrl-}.* The operating device 100 is arranged to provide voltage *V*_{ctrl} of predefined characteristics across the nodes *V_{ctrl+}* and *V*_{*ctrl*-} whenever the electrical energy is provided via the input nodes *Vᵢₙ₊* and *Vᵢₙ₋*. As an example, the voltage *V*_{ctrl} across the nodes *V_{ctrl+}* and *V_{ctrl-}* of the control interface may be a constant or substantially constant DC voltage or the voltage *V*_{ctrl} may be varied over time according to predefined rule or pattern.

The operating device 100 comprises sensing means for sensing one or more predefined electric characteristics of a component, circuit or device, e.g. the identification circuit 140, possibly coupled to the operating device 100 via the control interface. The sensing may be accomplished indirectly through another quantity.

As an example, the sensing means may comprise current sensing means for sensing electric current *I*_{ctrl} provided via the control interface, and current evaluation means for determining a reference value of the electric current *I*_{ctrl}. The current evaluation means may be arranged to generate, on basis of the determined reference value of the electric current *I*_{ctrl}, control information that is indicative of electric characteristics of the lighting means 120 (to be) coupled as a load of the operating device 100 via the output interface. This reference value may comprise, for example, an instantaneous value of the electric current *I*_{c-trl} or an average level of the electric current *I*_{ctrl} over a suitable averaging period. Further in this regard, the operating device 100 may be arranged to selectably set the nominal level for the output current *I*ₒᵤₜ in dependence of the reference value, e.g. the reference value of the electric current *I*_{ctrl}. The mapping between the reference value and the nominal level for the output current *I*ₒᵤₜ is typically predetermined one and it may be set or preconfigured during manufacturing and/or installation of the operating device 100.

As an example, the identification circuit 140 may comprise a resistor *R*ₛₑₜ coupled between the nodes *V_{ctrl+}* and *V_{ctrl-}* of the control interface, as schematically illustrated in Figure 2. Consequently, the reference value of the electric current *I*_{ctrl} derived by the current evaluation means 102 may be descriptive of the current via the resistor *R*ₛₑₜ. Thus, in this scenario, the resistance of the resistor *R*ₛₑₜ may be employed to set the nominal level of the output current *I*ₒᵤₜ to a desired value.

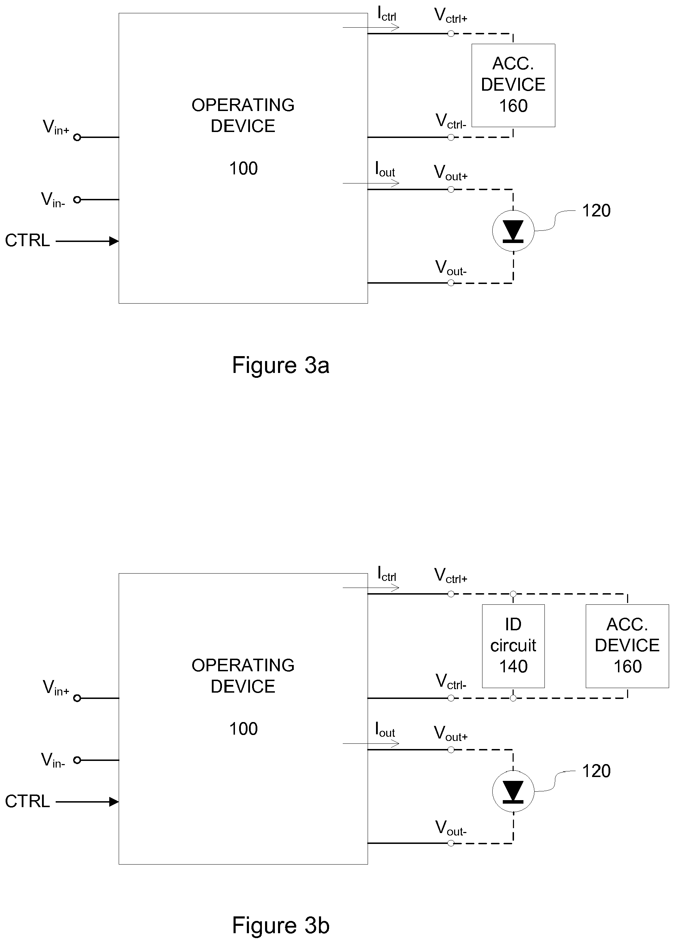

Instead of or in addition to the identification circuit 140, the control interface of the operating device 100 may be applied for connecting an accessory device, also referred to as an auxiliary device in the following. In this regard, Figure 3a schematically illustrates an accessory device 160 coupled to the nodes *V_{ctrl+}* and *V_{ctrl-}* of the control interface instead of the identification circuit 140, whereas Figure 3b schematically illustrates the accessory device 160 coupled to the nodes *V_{ctrl+}* and *V_{ctrl-}* of the control interface in parallel with the identification circuit 140. The accessory device 160 may comprise e.g. one or more sensor devices, a communication module or a processing component of another type to provide an accessory function for the operating device 100.

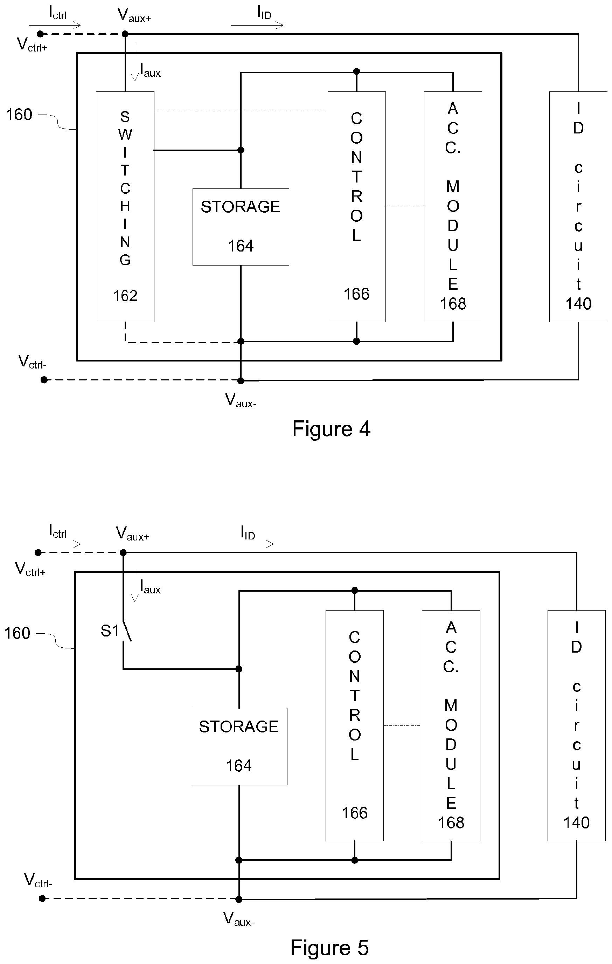

As an example in this regard, Figure 4 schematically illustrates at least some components of an exemplifying accessory device 160 that is connectable to the control interface of the LED driver 100 via an accessory interface comprising nodes *Vₐᵤₓ₊* and *Vₐᵤₓ₋.* In the example of Figure 4 the accessory device 160 is coupled in parallel to the identification circuit 140, both the accessory device 160 and the identification circuit 140 coupled to the control interface of the operating device 100. However, the identification circuit 140 is included in this example for illustration purposes and the accessory device 160 may be connected to the control interface without any further circuits or components connected in parallel thereto. This alternative arrangement corresponds e.g. to an identification circuit 140 of infinite resistance.

The accessory device 160 is connectable to the operating device 100 such that the node *Vₐᵤₓ₊* of the accessory interface is connectable to the node *V_{ctrl+}* of the control interface whereas the node *Vₐᵤₓ₋* of the accessory interface is connectable to the node *V_{ctrl-}* of the control interface. The accessory device 160 further comprises an energy storage means 164 for storing and providing electrical energy in the accessory device 160, an accessory module 168 coupled to receive the electrical energy from the energy storage means 164, switching means 162 for selectively enabling or disabling an electrical connection between one or more components of the accessory device 160 and the accessory interface, and control means 166 for operating the switching means 162 to selectively cause the energy storage means 164 to receive electrical energy from the accessory interface or to keep the energy storage means 164 from receiving electrical energy from the accessory interface.

The energy storage means 164 may comprise any combination of one or more elements or components that is suited to serve as a temporary storage of electrical energy. As an example, the energy storage means 164 may be provided as one or more capacitor, as one or more supercapacitors or as a rechargeable battery, or any combination of these.

The control means 166 may comprise a processor, microcontroller or a programmable device of other type arranged to operate the switching means 162 and the accessory module 168 in a desired manner. The control means 166 may be arranged to carry out its task in accordance with program code stored in a memory that is provided as part of the control means 166 or that is otherwise provided in the accessory device 160 such that it is accessible by the control means 166.

The accessory module 168 may comprise a sensor device, such as a light sensor, a proximity sensor, a motion sensor, an acoustic sensor, a temperature sensor, a magnetic sensor, sensor of radiation other than visible light, etc. As another example, the accessory module 168 may comprise a communication module that enables wireless communication e.g. as optical communication or as radio communication.

The switching means 162 comprises at least first switching means for selectively enable or disable an electrical connection between the energy storage means 164 and the accessory interface under control of the control means 166. In this regard, the first switching means may comprise a first switch S1, as schematically illustrated in Figure 5. When in a closed state, the first switch S1 electrically couples the energy storage means 164 to the accessory interface, whereas when in an open state, the first switch S1 electrically isolates (e.g. decouples) the energy storage means 164 from the accessory interface. The state of the first switch S1 may be controlled by a control signal issued from the control means 166. The first switch S1 may be provided, for example, as a transistor or other solid-state switching component of suitable characteristics.

For editorial clarity and for brevity of description, in the following the connection between the energy storage means 164 and the accessory interface may be also referred to as a first auxiliary connection or as a first auxiliary current path.

When the first auxiliary current path is enabled, the electrical energy may flow from the accessory interface to the energy storage means 164 and possibly also directly to the control means 166 and the accessory module 168. In the enabled state of the first auxiliary current path the electric current *I*_{ctrl} provided via the control interface can be considered to include two components: electric current *I*ₐᵤₓ provided to components of the accessory device 160 and electric current *I*_{ID} provided to the identification circuit 140 such that *I*_{ctrl} = *I*ₐᵤₓ + *I*_{ID}. Note that in case there is no identification circuit 140 coupled to the control interface, the level of the electric current *I*_{ID} is zero.

When the first auxiliary current path is disabled, the electrical energy stored in the energy storage means 164 during the enabled state of the first auxiliary current path may flow from the energy storage means 164 to the control means 166 and to the accessory module 168. Hence, the energy storage means 164 serves to provide operating power to the control means 166 and to the accessory module 168 during periods of time when the control means 166 and the accessory module 168 are isolated from external operating power available via the accessory interface. In the disabled state of the first auxiliary current path the electric current *I*ₐᵤₓ is zero and, consequently, the electric current *I*_{ID} provided to the identification component 140 equals the electric current *I*_{ctrl} provided via the control interface.

The control means 166 may be arranged to cause the first switching means to alternately enable and disable the first auxiliary current path in accordance with a predefined switching pattern. In this regard, a switching pattern defines the timing of enabling and disabling the first auxiliary current path. Consequently, a sequence of alternating periods of enabled and disabled state of the first auxiliary current path is provided, where the durations of periods of enabled and disabled states are predefined. Such a predefined sequence of alternating periods of enabled and disabled states of the first auxiliary current path, for example, allows the operating device 100 to make use of the control interface for purposes other than supplying operating power to the accessory device 160 possibly coupled to the control interface, at least during periods of the disabled state of the first auxiliary current path. In particular, the operating device 100 may cause the current evaluation means to generate the reference value of the electric current provided via the control interface during one or more periods of disabled state of the first auxiliary current path and, consequently, to generate the control information that is indicative of electric characteristics of the lighting means 120 (to be) coupled as a load of the operating device 100 via the output interface, as described in the foregoing.

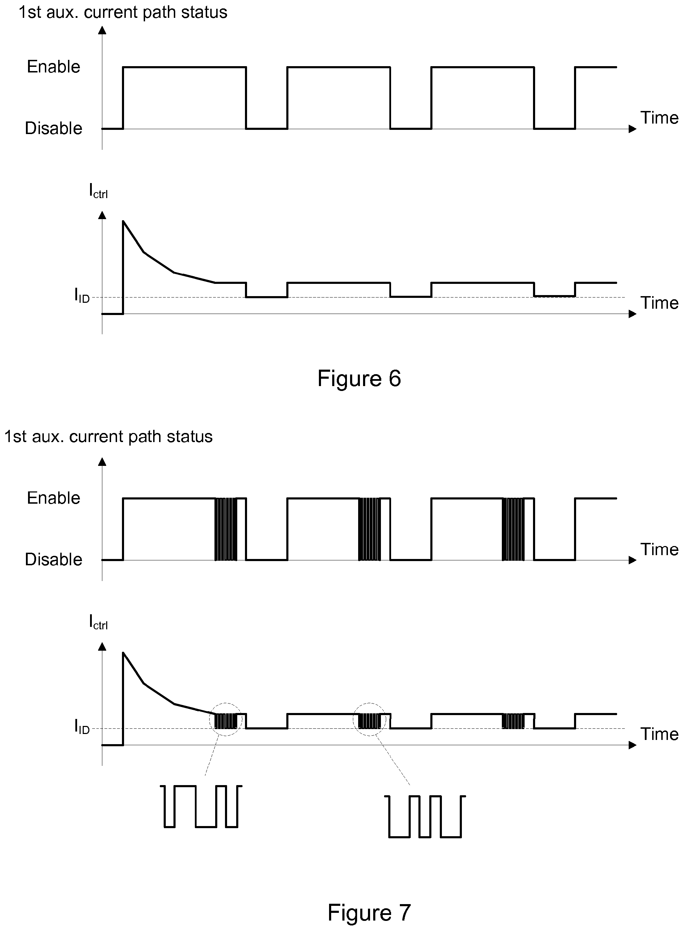

Figure 6 depicts an example of a switching pattern and one of its consequences. The upper curve of Figure 6 indicates the state of the first auxiliary current path over time, in other words the exemplifying switching pattern, whereas the lower curve indicates the electric current *I*_{ctrl} provided from the operating device 100 via the control interface. As can be seen from Figure 6, during the first-time enablement of the first auxiliary current path the electric current *I*_{ctrl} first quickly increases to a peak value, from which it gradually decreases to a value that is the sum of the electric current consumed by components of the accessory device 160 and the electric current *I*_{ID}. This behavior of the electric current *I*_{ctrl} is caused by the storage means 164 first drawing a larger recharging current that gradually dies off when the storage means 164 becomes fully charged.

During subsequent periods of enabled state of the first auxiliary current path the electric current *I*_{ctrl} remains essentially constant, i.e. at a level that is the sum of the current consumed by the components of the accessory device 160 and the electric current *I*_{ID}. There may be brief moments of slightly higher current in the beginning of each period of enabled state of the first auxiliary current path to top up the storage means, but in Figure 6 these are assumed to be negligible. In contrast, during periods of disabled state of the first auxiliary current path the electric current *I*_{ctrl} is unaffected by the power consumed by any component of the accessory device 160 and hence the electric current *I*_{ctrl} is kept at a level caused by the reference circuit 140 possibly coupled to the control interface, in other words during periods of disabled state of the first auxiliary current path the electric current *I*_{ctrl} equals the electric current *I*_{ID}.

The periods of disabled state of the first auxiliary current path constitute an operational state of the accessory device 160 at which the accessory device 160 is electrically isolated from the control interface and at which electric characteristics of the identification circuit 140 possibly also coupled to the control interface are detectable by the operating device 100 via the control interface without any bias or disturbance. In contrast, the periods of enabled state of the first auxiliary current path constitute an operational state of the accessory device 160 at which the accessory device 160 draws electrical energy from the control interface of the operating device 100 and at which the electric characteristics of the identification circuit 140 possibly also coupled to the control interface are not reliably detectable via the control interface.

Assuming the structure shown in Figure 5 the term "electrically isolated" does not necessarily mean complete galvanic isolation; for example in Figure 5 the storage means 164 is galvanically connected to the node *Vₐᵤₓ₋* of the accessory interface all the time. However, since there is no conductive current path between the nodes of the accessory interface through the accessory device 160 when the switch S1 is open, no current can flow therethrough, which explains the meaning of "electrically isolated" above.

Consequently, the duration of periods of disabled state of the first auxiliary current path in the employed switching pattern need to be dimensioned in accordance with the capacity of the energy storage means 164 and the electrical energy consumed by the components of the accessory device 160. In particular, this dimensioning must be such that sufficient amount of electrical energy at the end of each period of disabled state of the first auxiliary current path is ensured to enable the control means 166 to cause the first switching means to set the first auxiliary current path back to the enabled state.

The operating device 100 may be configured to cause the evaluation means therein to generate the control information indicative of the electric characteristics of the load (to be) coupled to the output interface during periods of disabled state of the first auxiliary current path and, in contrast, to refrain from causing the evaluation means to generate the control information during periods of enabled state of the first auxiliary current path. The information regarding the timing of periods of the enabled and/or disabled state of the first auxiliary current path, in other words the characteristics of the employed switching pattern, may be predetermined information stored in the operating device 100, or the operating device 100 may have been configured to automatically detect the lowest value of the electric current *I*_{ctrl} irrespective of the switching pattern. As a yet further alternative the indication concerning the timing of the enabled and disabled states of the first auxiliary current path may be received in a message originating from the accessory device 160 (as will be described in the following).

As another example, the current evaluation means may be responsive to temporal variations observed in the electric current *I*_{ctrl}. In this regard, measured level of the electric current *I*_{ctrl} that remains constant or essentially constant for at least predefined period of time may serve as an indication of the operational state of the accessory device 160 at which electric characteristics of the identification circuit 140 possibly also coupled to the control interface are detectable via the control interface without any bias or disturbance. In contrast, variations in the electric current *I*_{ctrl} may serve as indication of a period of the operational state of the accessory device 160 at which the electric characteristics of the identification circuit 140 possibly also coupled to the control interface are not reliably detectable via the control interface.

The accessory device 160 may be arranged to make use of the accessory interface therein, and hence the control interface of the operating device 100, to transfer a message from the accessory device 160 to the operating device 100. As an example in this regard, the control means 166 may be arranged to cause the first switching means to alternately enable and disable the first auxiliary current path according to a predefined signaling pattern. The signaling pattern may involve causing further alternating enabled and disabled states of the first auxiliary current path in addition to those caused by the switching pattern for example at a frequency that is higher than that of the switching pattern. The signaling pattern hence causes changing the electric current *I*_{ctrl} provided via the accessory interface to follow a pulse-like pattern, and characteristics of these changes (or pulses) serve as a message to be provided via the accessory interface (and hence via the control interface) to the operating device 100.

If using the first switching means to generate the signaling pattern, the signaling pattern may be provided during a period of enabled state of the first auxiliary current path defined by the employed switching pattern, preferably at or close to the end of a period of enabled state of the first auxiliary current path. Herein, the first period of enabled state of the first auxiliary current path refers to the first period of enabled state when switching the operating device 100 from an off state to an on state (e.g. when connecting the input nodes *Vᵢₙ₊* and *Vᵢₙ₋* of the operating device 100 to a source of operating power). Consequently, the message is observed in the operating device 100 as a sequence of periods (e.g. pulses) of decreased current level in the electric current *I*_{ctrl} provided via the control interface.

It is also possible to use the signaling pattern as a whole as the switching pattern. This means that for example the length of periods of enabled state of the first auxiliary current path are not necessarily constant at all, but the control means 166 may be arranged to cause the first switching means to alternately enable and disable the first auxiliary current path for longer or shorter periods. In Figure 6 this would mean that the rectangular pulses in the upper curve and/ or the pauses between them were of variable lengths, with the information content of the message carried by these lengths.

As another example the existence or non-existence of periods of enabled state of the first auxiliary current path may be used as the carrier of information. In Figure 6 this would mean that there is a predetermined default length of an individual enabled/disabled cycle (i.e. one rectangular pulse plus the immediately following pause). Each cycle that does include a period of enabled state of the first auxiliary current path corresponds to one digital symbol, like "1", while each cycle that does not include a period of enabled state corresponds to another digital symbol, like "0". Such an embodiment naturally assumes that the storage means 164 has a capacity large enough to ensure appropriate supply of energy in the accessory device even for the duration of repeated cycles without a period of enabled state.

A signaling pattern may comprise a predefined signaling pattern that is arranged to carry, for example, an indication that the accessory device 160 is coupled to the control interface of the operating device 100 and/or an indication of the type of the accessory device 160. As a further example, a predefined signaling pattern may carry information that defines the switching pattern applied by the accessory device 160, thereby providing the operating device 100 with information that defines the timing of periods of the enabled and/or disabled state of the first auxiliary current path. A predefined signaling pattern may be provided from the accessory device 160 e.g. at a predefined (temporal) portion or segment of the first period of enabled state of the first auxiliary current path, for example at the end of the first period of enabled state of the first auxiliary current path.

As a further example, a signaling pattern may comprise a message indicating the state of the accessory module 168, generated by the control means 166 in accordance with a control signal (e.g. a measurement signal or a message) received from the accessory module 168. Such a signaling pattern may be provided during a predefined (temporal) sub-period (e.g. at the end of) one or more periods of enabled state of the first auxiliary current path following the first period of enabled state of the first auxiliary current path. A signaling pattern of this type may be applied e.g. to pass a measurement result from the accessory module 168 (where the accessory module 168 may be provided e.g. as a sensor module) or to pass a message received from a device other than the operating device 100 from the accessory module 168 (where the accessory module 168 may be provided e.g. as a communication module).

Figure 7 illustrates the concept of providing one or more signaling patterns using the first switching means as described in the foregoing by depicting exemplifying signaling patterns applied together with the example switching pattern illustrated in Figure 6 such that the signaling pattern as are introduced during sub-periods that are close to the ends of respective periods of enabled state of the first auxiliary current path.

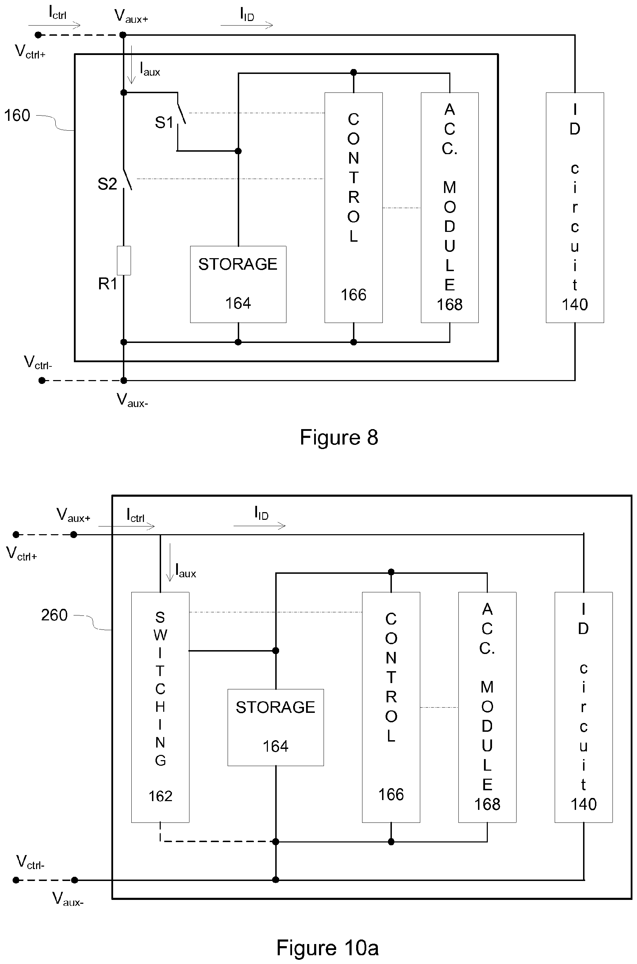

The switching means 162 may comprise a second switching means for selectively enabling or disabling a second electrical connection between the nodes *Vₐᵤₓ₊* and *Vₐᵤₓ₋* within the accessory device 160. The selective enabling or disabling may be provided under control of the control means 166. In this regard, the second switching means may comprise a second switch S2, as schematically illustrated in Figure 8. When in a closed state, the second switch S2 causes electrically coupling the nodes *Vₐᵤₓ₊* and *Vₐᵤₓ₋* to each other, whereas when in an open state there is no electrical coupling between the nodes *Vₐᵤₓ₊* and *Vₐᵤₓ₋.* In the example of Figure 8 this possible coupling is provided via a resistor R1 but different arrangements of electrical components for limiting the current in the current path between the nodes *Vₐᵤₓ₊* and *Vₐᵤₓ₋* may be applied instead. The state of the second switch S2 may be controlled by a control signal issued from the control means 166. The second switch S2 may be provided, for example, as a transistor or other solid-state switching component of suitable characteristics.

For editorial clarity and for brevity of description, in the following the second electrical connection between the nodes *Vₐᵤₓ₊* and *Vₐᵤₓ₋* within the accessory device 160 may be also referred to as a second auxiliary connection or as a second auxiliary current path.

Instead of using the first switching means to transfer a message from the accessory device 160 via the accessory interface and hence via the control interface to the operating device 100, the second switching means may be employed for this purpose. As an example in this regard, the control means 166 may be arranged to cause the second switching means to alternately enable and disable the second auxiliary current path according to a predefined signaling pattern, in a manner similar to that described in the foregoing for operating the first switching means for the same purpose. Consequently, the signaling pattern causes changing the electric current *I*_{ctrl} provided via the accessory interface to follow a pulse-like pattern, and characteristics of these changes (or pulses) serve as a message to be provided via the accessory interface (and hence via the control interface) to the operating device 100.

If using the second switching means of the accessory device 160 to generate the signaling pattern, it may be provided either during a period of enabled state or disabled state of the first auxiliary current path defined by the employed switching pattern. As an example, the signaling pattern may be provided during a sub-period that is at or close to the beginning of a period of disabled state of the first auxiliary current path or at or close to the end of a period of enabled state of the first auxiliary current path. Consequently, the message is observed in the operating device 100 as a sequence of periods (e.g. pulses) of increased current level in the electric current *I*_{ctrl} provided via the control interface. The content of the signaling pattern may be the same as described in the foregoing in context of employing the first switching means to generate the signaling pattern.

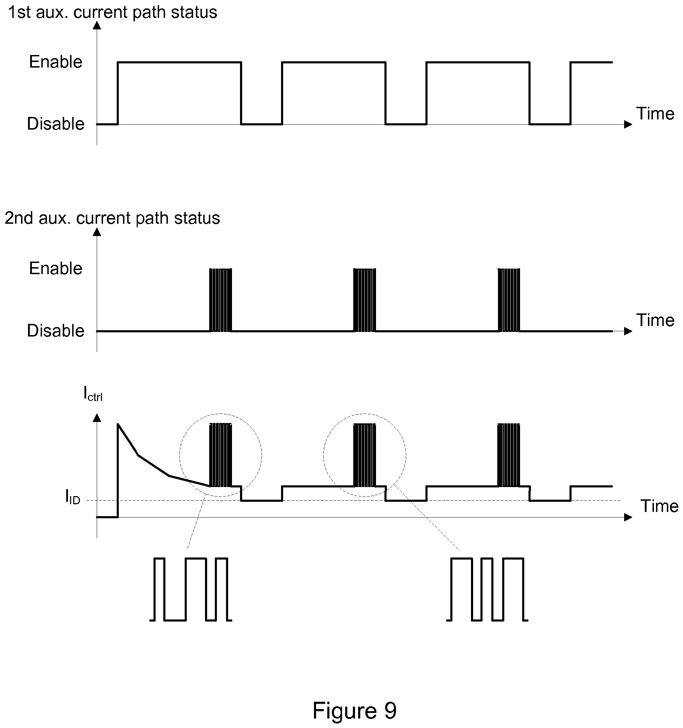

Figure 9 illustrates the concept of providing one or more signaling patterns using the second switching means as described in the foregoing by depicting exemplifying signaling patterns applied together with the example switching pattern illustrated in Figure 6 such that the signaling pattern as are introduced during sub-periods that are close to the ends of respective periods of enabled state of the first auxiliary current path.

In order to receive the message conveyed by the signaling pattern originating from the accessory device 160, the current evaluation means in the operating device 100 may be further arranged to interpret pulses detected in the electric current supplied via said control interface as a message received via the control interface. In this regard, the detected pulses may be interpreted in accordance with predefined mapping information stored in the operating device 100 (while the accessory device 160 makes use of an inverse of the same mapping information for generation of the pulses).

In case a signaling pattern originating from the accessory device 160 is provided during a sub-period of a period of disabled state of the first auxiliary current path, the operating device 100 must be arranged to refrain from causing the current evaluation means to generate the control information during such a sub-period to avoid generation of incorrect control information due to changes in the level of the electric current *I*_{ctrl} that may occur due to the signaling pattern.

The operating device 100 may also be able to transmit a message via the control interface (and hence via the accessory interface) to the accessory device 160. For this purpose, the operating device 100 may comprise a switching means for making controllable changes to the voltage *V*_{ctrl} across the nodes *V_{ctrl+}* and *V_{ctrl-}* of the control interface and/or to the electric current *I_{ctrl}* provided via the control interface. These controllable changes, e.g. pulses, in the voltage *V*_{ctrl} and/or in the level of the electric current *I*_{ctrl} serve as a signaling pattern that conveys the message provided via the control interface (and hence via the accessory interface) to the accessory device 160.

In the accessory device 160 the controllable changes (e.g. pulses) detected in the voltage and/or in the electric current *I*_{ctrl} may be interpreted as a signaling pattern originating from the operating device 160. In order to receive the message conveyed by this signaling pattern, the accessory device 160 may comprise voltage sensing means and/or current sensing means. The control means 166 may be configured to adjust or control the operation of the accessory device 160, e.g. the operation of the accessory module 168, in accordance with the message carried by the received signaling pattern.

Characteristics, frequency and/or information content carried in signaling patterns conveying messages indicating the state of the accessory module 168 typically depend on the purpose and operation of the accessory module 168. The messages are generated and interpreted in accordance with a predefined protocol.

As an example, if the accessory module 168 comprises a light sensor, the accessory device 160 may periodically convey messages indicating the observed light level via the accessory interface to the operating device 100, which is then able to regulate the output current *I*_{ctrl} such that a desired illumination level is maintained. In this scenario, the operating device 100 may be further configured e.g. to convey messages indicating the desired reporting frequency via the control interface to the accessory device 160. Such a scenario allows installing the light sensor to the operating device 100 without a need for a dedicated control input for the sensory information.

As another example, if the accessory module 168 comprises a wireless radio transceiver, the messages conveyed via the accessory interface / control interface may be indicative of messages or commands received from a remote entity by the wireless radio transceiver and/or indicative of messages or other information to be transmitted to a remote entity by the wireless radio transceiver. Such a scenario hence enables providing a 'remote control' of the light fixture or lighting arrangement part of which the operating device 100 is provided.

In the examples provided in the foregoing the identification circuit 140 has been described as an entity that is separate from the accessory device 160. As a further example, Figure 10a schematically illustrates at least some components of an accessory device 260. The accessory device 260 is similar in structure and operation to the accessory device 160 with the exception that the identification circuit 140 (e.g. the resistor *R*ₛₑₜ) is provided as part of the accessory device 260.

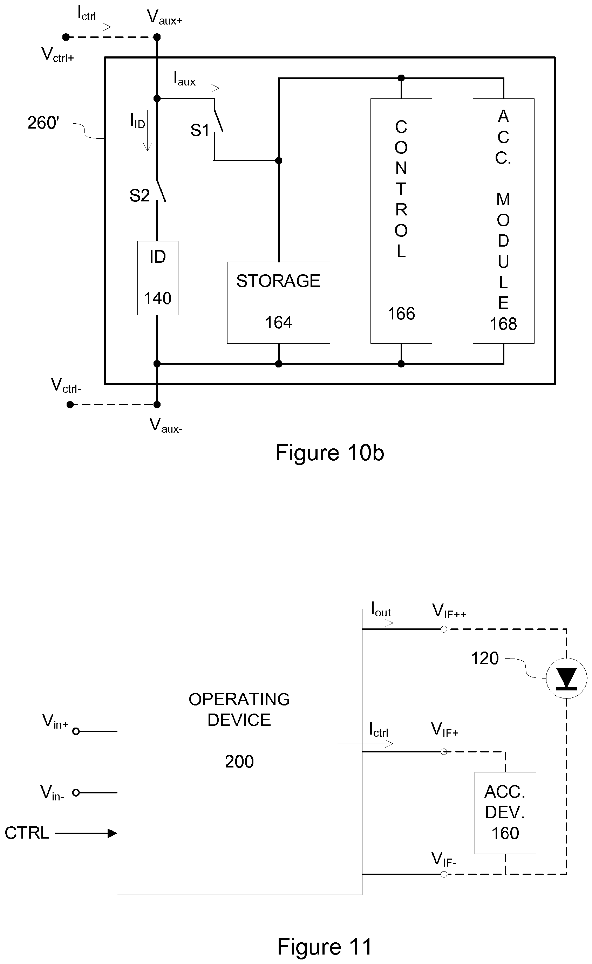

Figure 10b schematically illustrates at least some components of an accessory device 260', which is another exemplifying variation of the accessory device 160 equipped with the identification circuit 140. The accessory device 260' is similar to the accessory device 160 depicted in Figure 8, with the exception that in the accessory device 260' the identification circuit 140 (e.g. the resistor *R*ₛₑₜ) is arranged in the second auxiliary current path instead of the resistor R1. In this example, when the second switching means is caused to enable the second auxiliary current path (e.g. the control means 166 is caused to set the second switch S2 in a closed state), the electric current *I*_{ID} is able to flow via the identification circuit 140, whereas when the second switching means is caused to disable the second auxiliary current path (e.g. the control means 166 is caused to set the second switch S2 is in an open state) there is no electric current via the identification circuit 140 (i.e. the electric current *I*_{ID} is zero).

Hence, the second switching means of the accessory device 260' may be employed to create the operational state at which the electric characteristics of the identification circuit 140 are detectable by the operating device 100 via the control interface without any bias or disturbance by disabling the first auxiliary current path and enabling the second auxiliary current path.

Also the accessory device 260' enables usage of the second switching means to convey a message via the accessory interface by the control means 166 causing the second switching means to alternately enable and disable the second auxiliary current path according to a predefined signaling pattern. The signaling pattern may be provided either during a period of enabled state or a period of disabled state of the first auxiliary current path defined by the employed switching pattern. The message is observed in the operating device 100 as a sequence of periods (e.g. pulses) of decreased current level in the electric current *I*_{ctrl} provided via the control interface.

Figure 11 schematically illustrates an arrangement comprising an operating device 200 for operating the lighting means 120. The operating device 200 is a variation of the operating device 100 described in the foregoing. A difference between the operating devices 100 and 200 is the arrangement of the output interface and the control interface. In the operating device 200 the output interface and the control interface are integrated into a single interface that comprises nodes *V_{IF-}*, *V_{IF+}* and *V_{IF++}.* In this arrangement the identification circuit 140 is connectable between the nodes *V_{IF-}* and *V_{IF+},* whereas the lighting means 120 is connectable between the nodes *V_{IF-}* and *V_{IF++}.* Hence, as a mapping between the nodes of the interfaces of the operating devices 100 and 200, the node *V_{IF-}* of the operating device 200 corresponds to either of the nodes *V_{ctrl-}* or *Vₒᵤₜ₋* of the operating device 100, the node *V_{IF+}* corresponds to the node *V_{ctrl+}* of the operating device 100, whereas the node *V_{IF++}* corresponds to the node *Vₒᵤₜ₊* of the operating device 100. Consequently, the operating device 200 is arranged to generate the control voltage *V*_{ctrl} between the nodes *V_{IF-}* and *V_{IF+}* and to supply the regulated output current *I*ₒᵤₜ to a circuit or device coupled between the nodes *V_{IF-}* and *V_{IF++}.* Typically, if DC operation is considered, the node *V*_{*IF*-} is at a ground potential while higher potentials are provided at the nodes *V_{IF+}* and *V_{IF++}.* AC operation is possible with the embodiment shown in Figure 11, in which case the potential differences and polarities of the various nodes of the output interface vary.

Figure 11 depicts the lighting means 120 coupled between the nodes *V_{IF-}* and *V_{IF++}* and the accessory device 160 coupled between the noes *V_{IF-}* and *V_{IF+}.* As exemplifying variations of the arrangement illustrated in Figure 11, the identification circuit 140 may be coupled in parallel with the accessory device 160 or the accessory device 260 (or another variation of the accessory device 160) may be coupled between the nodes *V_{IF-}* and *V_{IF+}* instead of the accessory device 160.

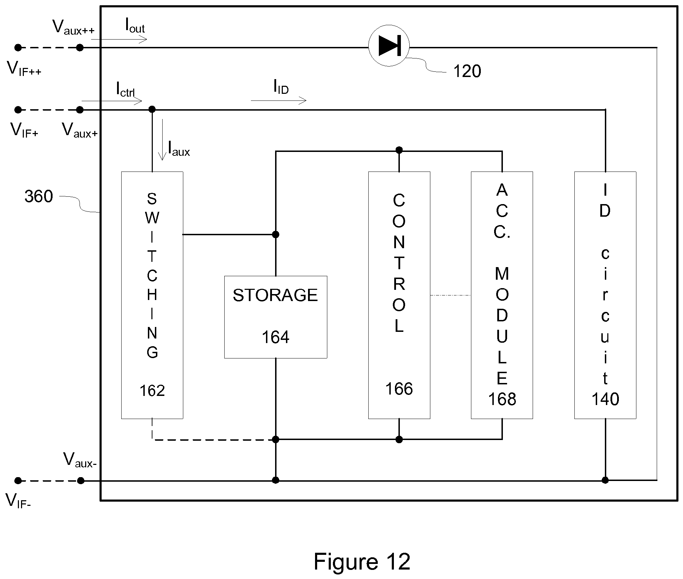

Figure 12 schematically illustrates at least some components of an accessory device 360. The accessory device 360 is provided as a variation of the accessory device 260, while as another example the accessory device 360 could be provided as a variation of the accessory device 160, i.e. without the identification circuit 140 being included in the accessory device 360. In such a variation the possible identification circuit 140 may be separately coupled between the nodes *V_{IF-}* and *V_{IF+}.* As yet another example the accessory device 360 could be provided as a variation of the accessory device 260', i.e. with the identification circuit 140 being included in the controllable second current path between the nodes *V*ₐᵤₓ₋ and *V*ₐᵤₓ₊.

A difference to the accessory devices 160 and 260 is that the accessory device 360 further comprises the lighting means 120. Another difference to the accessory device 260 is that the accessory interface of the accessory device 360 comprises a third node *V*ₐᵤₓ₊₊ in addition to the nodes *V*ₐᵤₓ₋, and *V*ₐᵤₓ₊. The accessory device 360 is connectable to the operating device 200 by connecting the node *V*ₐᵤₓ₋ to node *V_{IF-},* node *Vₐᵤₓ₊* to node *V_{IF+}* and node *V*ₐᵤₓ₊₊ to node *V_{IF++}.*

## Claims

1. An accessory device (160, 260, 260', 360) for an operating device (100, 200) of lighting means, comprising
an interface comprising a first node and a second node for electrically coupling the accessory device (160, 260, 260', 360) to respective nodes of the operating device (100, 200) for reception of a voltage across said first and second nodes,
energy storage means (164) adapted to store and provide electrical energy within the accessory device (160, 260, 260', 360),
an accessory module (168) coupled to receive the electrical energy from said energy storage means (164),
switching means (162) comprising first switching means (S1) adapted to selectively enable or disable a first electrical connection between the energy storage means (164) and said interface, and
control means (166) adapted to operate the first switching means (S1) to selectively cause the energy storage means (164) to receive electrical energy from said interface or keep the energy storage means (164) from receiving electrical energy from said interface,
**characterized in that** said control means (166) is arranged to cause the first switching means (S1) to alternately enable and disable said first electrical connection in accordance with a predefined switching pattern.

2. An accessory device (160, 260, 260', 360) according to claim 1, wherein said control means (166) is arranged to further cause the first switching means (S1) to alternately enable and disable said first electrical connection in accordance with a control signal received from the accessory module (168), thereby introducing one or more changes in the electric current through said interface, which changes serve as a message to be provided via said interface.

3. An accessory device (160, 260, 260', 360) according to claim 1,
further comprising second switching means (S2) adapted to selectively enable or disable a second electrical connection between said first and second nodes,
wherein the control means (166) is arranged to operate the second switching means (S2) to cause selectively enabling and disabling said second electrical connection.

4. An accessory device (160, 260, 260', 360) according to claim 3, wherein said control means (166) is arranged to cause the second switching means (S2) to alternately enable and disable said second electrical connection in accordance with a control signal received from the accessory module (168), thereby introducing one or more pulses in the electric current in said second electrical connection, which pulses serve as a message to be provided via said interface.

5. An accessory device (360) according to any of claims 1 to 4,
wherein said interface further comprises a third node for electrically coupling the accessory device (360) to a respective node of the operating device, for reception of regulated electric current (lout) between the first and third nodes, and
wherein the accessory device (360) further comprises one or more light-emitting semiconductor devices (120) arranged in the current path between the first and third nodes.

6. An accessory device (360) according to claim 5,
wherein the accessory device (360) comprises an identification component (140), an electric characteristic of which is indicative of a current rating of said one or more light-emitting semiconductor devices (120), and at least one of said first (S1) and second switching means (S2) is configured to selectively create a state at which said electric characteristic of said identification component (140) is detectable by said operating device (100, 200) through said interface.

7. An accessory device (160, 260, 260', 360) according to any of claims 1 to 6,
further comprising first current sensing means adapted to sense the electric current supplied via said interface,
wherein the control means (166) is arranged to interpret pulses detected in the electric current supplied via said interface as a message received via said interface.

8. An accessory device (160, 260, 260', 360) according to any of claims 1 to 7, wherein said energy storage means (164) comprises at least one of the following: a capacitor, a supercapacitor, a rechargeable battery.

9. An accessory device (160, 260, 260', 360) according to any of claims 1 to 8, wherein said accessory module (168) comprises at least one of the following: a light sensor, a proximity sensor, a motion sensor, an acoustic sensor, a communication module.

10. An arrangement comprising
an accessory device (160, 260, 260', 360) according to any of claims 1 to 9, and
an operating device (100, 200) of lighting means comprising a second interface comprising a fourth node and a fifth node, the operating device (100, 200) arranged to provide said voltage across said fourth and fifth nodes,
wherein each of the first and second nodes of the accessory device (160, 260, 260', 360) is electrically coupled to respective one of the fourth and fifth nodes of the operating device (100, 200), and
wherein the operating device (100, 200) comprises
second current sensing means adapted to sense the electric current provided via said second interface, and
current evaluation means adapted to determine a reference value of said electric current provided via said second interface and to generate, on the basis of such determined reference value, control information indicative of electric characteristics of lighting means coupled as a load of the operating device (100, 200).

11. An arrangement according to claim 10, wherein said current evaluation means is further arranged to interpret pulses detected in the electric current supplied via said second interface as a message received via said interface.

12. An arrangement according to claim 10 or 11, wherein the operating device (100, 200) further comprises a third switching means adapted to make controllable changes of at least one of a voltage across said fourth and fifth nodes or a current through said second interface, which controllable changes serve as a message to be provided via said second interface.

13. An arrangement according to any of claims 10 to 12, comprising an identification component (140) coupled to said fourth and fifth nodes in parallel with the accessory device (160, 260, 260', 360), adapted to make electric current equal to said reference value flow through said second interface during periods when the first electrical connection between the energy storage means (164) and said interface is disabled.

## Patentansprüche

1. Zubehöreinrichtung (160, 260, 260', 360) für eine Bedienungseinrichtung (100, 200) von Beleuchtungsmitteln, umfassend
eine Schnittstelle, umfassend einen ersten Knoten und einen zweiten Knoten zum elektrischen Koppeln der Zubehöreinrichtung (160, 260, 260', 360) mit dazugehörigen Knoten der Bedienungseinrichtung (100, 200) zum Empfangen einer Spannung über den ersten und zweiten Knoten,
Energiespeichermittel (164), eingerichtet zum Speichern und Bereitstellen elektrischer Energie in der Zubehöreinrichtung (160, 260, 260', 360),
ein Zubehörmodul (168), gekoppelt zum Empfangen der elektrischen Energie von den Energiespeichermitteln (164),
Schaltmittel (162), umfassend erste Schaltmittel (S1), eingerichtet zum selektiven Aktivieren oder Deaktivieren einer ersten elektrischen Verbindung zwischen den Energiespeichermitteln (164) und der Schnittstelle, und
Steuermittel (166), eingerichtet zum Betreiben der ersten Schaltmittel (S1), um die Energiespeichermittel (164) selektiv zu veranlassen, elektrische Energie von der Schnittstelle zu empfangen, oder die Energiespeichermittel (164) daran zu hindern, elektrische Energie von der Schnittstelle zu empfangen,
**dadurch gekennzeichnet, dass** die Steuermittel (166) eingerichtet sind, um die ersten Schaltmittel (S1) zu veranlassen, die erste elektrische Verbindung entsprechend einem vordefinierten Schaltmuster zu aktivieren und deaktivieren.

2. Zubehöreinrichtung (160, 260, 260', 360) nach Anspruch 1, wobei die Steuermittel (166) eingerichtet sind, um ferner die ersten Schaltmittel (S1) zu veranlassen, die erste elektrische Verbindung abwechselnd entsprechend einem vom Zubehörmodul (168) empfangenen Steuersignal zu aktivieren und deaktivieren, wodurch eine oder mehrere Änderungen im elektrischen Strom durch die Schnittstelle eingeführt werden, wobei diese Änderungen als eine über die Schnittstelle bereitzustellende Nachricht dienen.

3. Zubehöreinrichtung (160, 260, 260', 360) nach Anspruch 1,
ferner umfassend zweite Schaltmittel (S2), eingerichtet zum selektiven Aktivieren oder Deaktivieren einer zweiten elektrischen Verbindung zwischen dem ersten und zweiten Knoten,
wobei die Steuermittel (166) eingerichtet sind zum Betreiben der zweiten Schaltmittel (S2), um das selektive Aktivieren und Deaktivieren der zweiten elektrischen Verbindung zu bewirken.

4. Zubehöreinrichtung (160, 260, 260', 360) nach Anspruch 3, wobei die Steuermittel (166) eingerichtet sind, um die zweiten Schaltmittel (S2) zu veranlassen, die zweite elektrische Verbindung abwechselnd entsprechend einem vom Zubehörmodul (168) empfangenen Steuersignal zu aktivieren und deaktivieren, wodurch ein oder mehrere Impulse im elektrischen Strom in der zweiten elektrischen Verbindung eingeführt werden, wobei diese Impulse als eine über die Schnittstelle bereitzustellende Nachricht dienen.

5. Zubehöreinrichtung (360) nach einem der Ansprüche 1 bis 4,
wobei die Schnittstelle ferner einen dritten Knoten umfasst zum elektrischen Koppeln der Zubehöreinrichtung (360) mit einem dazugehörigen Knoten der Bedienungseinrichtung zum Empfangen geregelten elektrischen Stroms (Iout) zwischen dem ersten und dritten Knoten, und
wobei die Zubehöreinrichtung (360) ferner eine oder mehrere Licht emittierende Halbleitereinrichtungen (120) umfasst, eingerichtet im Strompfad zwischen dem ersten und dritten Knoten.

6. Zubehöreinrichtung (360) nach Anspruch 5,
wobei die Zubehöreinrichtung (360) eine Identifizierungskomponente (140) umfasst, bei der eine elektrische Eigenschaft einen Nennstrom von einer oder mehreren Licht emittierenden Halbleitereinrichtungen (120) angibt und wobei mindestens eines der ersten (S1) und zweiten Schaltmittel (S2) ausgelegt ist zum selektiven Erzeugen eines Zustands, bei dem die elektrische Eigenschaft der Identifizierungskomponente (140) durch die Bedienungseinrichtung (100, 200) über die Schnittstelle detektierbar ist.

7. Zubehöreinrichtung (160, 260, 260', 360) nach einem der Ansprüche 1 bis 6,
ferner umfassend erste Strommessmittel, eingerichtet zum Abtasten des über die Schnittstelle zugeführten elektrischen Stroms,
wobei die Steuermittel (166) eingerichtet sind zum Interpretieren von im über die Schnittstelle zugeführten elektrischen Strom detektierten Impulsen als eine über die Schnittstelle empfangene Nachricht.

8. Zubehöreinrichtung (160, 260, 260', 360) nach einem der Ansprüche 1 bis 7, wobei die Energiespeichermittel (164) mindestens eines der Folgenden umfassen: einen Kondensator, einen Superkondensator, eine wiederaufladbare Batterie.

9. Zubehöreinrichtung (160, 260, 260', 360) nach einem der Ansprüche 1 bis 8, wobei das Zubehörmodul (168) mindestens eines der Folgenden umfasst: einen Lichtsensor, einen Näherungssensor, einen Bewegungssensor, einen akustischen Sensor, ein Kommunikationsmodul.

10. Anordnung, umfassend
eine Zubehöreinrichtung (160, 260, 260', 360) nach einem der Ansprüche 1 bis 9, und
eine Bedienungseinrichtung (100, 200) von Beleuchtungsmitteln, umfassend eine zweite Schnittstelle umfassend einen vierten Knoten und einen fünften Knoten, wobei die Bedienungseinrichtung (100, 200) eingerichtet ist zum Bereitstellen der Spannung über den vierten und fünften Knoten,
wobei jeder des ersten und zweiten Knotens der Zubehöreinrichtung (160, 260, 260', 360) mit einem dazugehörigen des vierten und fünften Knotens der Bedienungseinrichtung (100, 200) elektrisch gekoppelt ist und
wobei die Bedienungseinrichtung (100, 200) umfasst:
zweite Strommessmittel, eingerichtet zum Abtasten des über die zweite Schnittstelle bereitgestellten elektrischen Stroms, und
Strombewertungsmittel, eingerichtet zum Bestimmen eines Referenzwerts des über die zweite Schnittstelle bereitgestellten elektrischen Stroms und zum Erzeugen, auf der Basis des ermittelten Referenzwerts, von Steuerinformationen, die elektrische Eigenschaften von Beleuchtungsmitteln angeben, die als eine Last der Bedienungseinrichtung (100, 200) gekoppelt sind.

11. Anordnung nach Anspruch 10, wobei die Strombewertungsmittel ferner eingerichtet sind zum Interpretieren von im über die zweite Schnittstelle zugeführten elektrischen Strom detektierten Impulsen als eine über die Schnittstelle empfangene Nachricht.

12. Anordnung nach Anspruch 10 oder 11, wobei die Bedienungseinrichtung (100, 200) ferner ein drittes Schaltmittel umfasst, eingerichtet zum Vornehmen steuerbarer Änderungen von einer Spannung über den vierten und fünften Knoten und/oder einem Strom durch die zweite Schnittstelle, wobei die steuerbaren Änderungen als eine über die zweite Schnittstelle bereitzustellende Nachricht dienen.

13. Anordnung nach einem der Ansprüche 10 bis 12, umfassend eine Identifizierungskomponente (140), gekoppelt mit dem vierten und fünften Knoten parallel mit der Zubehöreinrichtung (160, 260, 260', 360), eingerichtet zum Veranlassen, dass elektrischer Strom gleich dem Referenzwert während Zeiträumen, in denen die erste elektrische Verbindung zwischen den Energiespeichermitteln (164) und der Schnittstelle deaktiviert ist, durch die zweite Schnittstelle fließt.

## Revendications

1. Dispositif accessoire (160, 260, 260', 360) pour un dispositif fonctionnel (100, 200) d'un moyen d'éclairage, comprenant :
une interface comprenant un premier noeud et un deuxième noeud pour coupler électriquement le dispositif accessoire (160, 260, 260', 360) à des noeuds respectifs du dispositif fonctionnel (100, 200) pour la réception d'une tension à travers lesdits premier et deuxième noeuds,
un moyen de stockage d'énergie (164) conçu pour stocker et fournir de l'énergie électrique dans le dispositif accessoire (160, 260, 260', 360),
un module accessoire (168) couplé pour recevoir l'énergie électrique en provenance dudit moyen de stockage d'énergie (164),
un moyen de commutation (162) comprenant un premier moyen de commutation (S1) conçu pour activer ou désactiver de manière sélective une première connexion électrique entre le moyen de stockage d'énergie (164) et ladite interface, et
un moyen de commande (166) conçu pour faire fonctionner le premier moyen de commutation (S1) pour contraindre de manière sélective le moyen de stockage d'énergie (164) à recevoir de l'énergie électrique en provenance de ladite interface ou pour empêcher le moyen de stockage d'énergie (164) de recevoir de l'énergie électrique en provenance de ladite interface,
**caractérisé en ce que** ledit moyen de commande (166) est agencé pour contraindre le premier moyen de commutation (S1) à activer et à désactiver de manière alternée ladite première connexion électrique en fonction d'un motif de commutation prédéfini.

2. Dispositif accessoire (160, 260, 260', 360) selon la revendication 1, dans lequel ledit moyen de commande (166) est agencé pour contraindre en outre le premier moyen de commutation (S1) à activer et à désactiver de manière alternée ladite première connexion électrique en fonction d'un signal de commande reçu du module accessoire (168), ce qui permet d'introduire un ou plusieurs changements dans le courant électrique au moyen de ladite interface, lesquels changements servent de message à fournir par le biais de ladite interface.

3. Dispositif accessoire (160, 260, 260', 360) selon la revendication 1,
comprenant en outre un deuxième moyen de commutation (S2) conçu pour activer ou pour désactiver de manière sélective une seconde connexion électrique entre lesdits premier et deuxième noeuds,
dans lequel le moyen de commande (166) est agencé pour contraindre le deuxième moyen de commutation (S2) à provoquer de manière sélective l'activation et la désactivation de ladite seconde connexion électrique.

4. Dispositif accessoire (160, 260, 260', 360) selon la revendication 3, dans lequel ledit moyen de commande (166) est agencé pour contraindre le deuxième moyen de commutation (S2) à activer et à désactiver de manière alternée ladite seconde connexion électrique en fonction d'un signal de commande reçu du module accessoire (168), ce qui permet d'introduire une ou plusieurs impulsions dans le courant électrique dans ladite seconde connexion électrique, lesquelles impulsions servent de message à fournir par le biais de ladite interface.

5. Dispositif accessoire (360) selon l'une quelconque des revendications 1 à 4,
dans lequel ladite interface comprend en outre un troisième noeud pour coupler électriquement le dispositif accessoire (360) à un noeud respectif du dispositif fonctionnel pour une réception d'un courant électrique régulé (Iout) entre les premier et troisième noeuds et
dans lequel le dispositif accessoire (360) comprend en outre un ou plusieurs dispositifs électroluminescents à semi-conducteur (120) disposés dans le trajet de courant entre les premier et troisième noeuds.

6. Dispositif accessoire (360) selon la revendication 5,
dans lequel le dispositif accessoire (360) comprend un composant d'identification (140), dont une caractéristique électrique indique un courant nominal dudit ou desdits dispositifs électroluminescents à semi-conducteur (120) et ledit premier moyen de commutation (S1) et/ou ledit deuxième moyen de commutation (S2) sont configurés pour créer de manière sélective un état dans lequel ladite caractéristique électrique dudit composant d'identification (140) peut être détectée par ledit dispositif fonctionnel (100, 200) au moyen de ladite interface.

7. Dispositif accessoire (160, 260, 260', 360) selon l'une quelconque des revendications 1 à 6,
comprenant en outre un premier moyen de détection de courant conçu pour détecter le courant électrique fourni par le biais de ladite interface,
dans lequel le moyen de commande (166) est agencé pour interpréter des impulsions détectées dans le courant électrique fourni par le biais de ladite interface en tant que message reçu par le biais de ladite interface.

8. Dispositif accessoire (160, 260, 260', 360) selon l'une quelconque des revendications 1 à 7, dans lequel ledit moyen de stockage d'énergie (164) comprend au moins l'un des éléments suivants : un condensateur, un supercondensateur, une batterie rechargeable.

9. Dispositif accessoire (160, 260, 260', 360) selon l'une quelconque des revendications 1 à 8, dans lequel ledit module accessoire (168) comprend au moins l'un des éléments suivants : un capteur de lumière, un capteur de proximité, un capteur de mouvement, un capteur acoustique, un module de communication.

10. Agencement comprenant
un dispositif accessoire (160, 260, 260', 360) selon l'une quelconque des revendications 1 à 9 et
un dispositif fonctionnel (100, 200) d'un moyen d'éclairage comprenant une seconde interface comprenant un quatrième noeud et un cinquième noeud, le dispositif fonctionnel (100, 200) étant agencé pour fournir ladite tension à travers lesdits quatrième et cinquième noeuds, dans lequel chacun des premier et second noeuds du dispositif accessoire (160, 260, 260', 360) est couplé électriquement à un noeud respectif des quatrième et cinquième noeuds du dispositif fonctionnel (100, 200) et dans lequel le dispositif fonctionnel (100, 200) comprend
un second moyen de détection de courant conçu pour détecter le courant électrique fourni par le biais de ladite seconde interface et
un moyen d'évaluation de courant conçu pour déterminer une valeur de référence dudit courant électrique fourni par le biais de ladite seconde interface et pour générer, sur la base d'une telle valeur de référence déterminée, des informations de commande indiquant une caractéristique électrique d'un moyen d'éclairage couplé comme charge du dispositif fonctionnel (100, 200) .

11. Agencement selon la revendication 10, dans lequel ledit moyen d'évaluation de courant est en outre agencé pour interpréter des impulsions détectées dans le courant électrique fourni par le biais de ladite seconde interface en tant que message reçu par le biais de ladite interface.

12. Agencement selon la revendication 10 ou 11, dans lequel le dispositif fonctionnel (100, 200) comprend en outre un troisième moyen de commutation conçu pour réaliser des changements contrôlables d'une tension à travers lesdits quatrième et cinquième noeuds et/ou d'un courant à travers ladite seconde interface, lesquels changements contrôlables servent de message à fournir par le biais de ladite seconde interface.

13. Agencement selon l'une quelconque des revendications 10 à 12, comprenant un composant d'identification (140) couplé auxdits quatrième et cinquième noeuds en parallèle avec le dispositif accessoire (160, 260, 260', 360), conçu pour rendre un courant électrique égal audit flux de valeur de référence au moyen de ladite seconde interface pendant des périodes pendant lesquelles la première connexion électrique entre le moyen de stockage d'énergie (164) et ladite interface est désactivée.
